(19) Europäisches Patentamt / European Patent Office / Office européen des brevets

(11) **EP 4 345 982 A1**

(12) **EUROPÄISCHE PATENTANMELDUNG**

(43) Veröffentlichungstag:
**03.04.2024   Patentblatt 2024/14**

(21) Anmeldenummer: 23196693.8

(22) Anmeldetag: **12.09.2023**

(51) Internationale Patentklassifikation (IPC):
***H01M 10/54*** *(2006.01)*

(52) Gemeinsame Patentklassifikation (CPC):
**H01M 10/54**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **29.09.2022   DE 102022210311**

(71) Anmelder: **Robert Bosch GmbH**
**70442 Stuttgart (DE)**

(72) Erfinder:
- **Krieger, Sebastian**
  **89073 Ulm (DE)**
- **Verbeet, Richard**
  **89073 Ulm (DE)**
- **Bihler, Christoph**
  **70736 Fellbach (DE)**
- **Willburger, Joerg**
  **70173 Stuttgart (DE)**

(54) **VERFAHREN ZUM ZERLEGEN EINER ODER MEHRERER BAUGRUPPEN**

(57) Die vorliegende Offenbarung betrifft ein Verfahren zum Zerlegen einer oder mehrerer Baugruppen ($B_1$, $B_2$ bis $B_X$), vorzugsweise Batterie-Packs, in jeweils mehrere Bauteile ($M_1$, $M_2$ bis $M_X$), von denen jedes Bauteil ($M_1$, $M_2$ bis $M_X$) mit bestimmten Merkmalen und/oder Eigenschaften einem entsprechenden Bauteiltyp ($T_1$, $T_2$ bis $T_X$) zugeordnet wird, und zur Bestimmung des Gewichts der zerlegten Bauteile ($M_1$, $M_2$ bis $Mx$).

Die Gewichte der Bauteile ($M_1$, $M_2$ bis $M_X$) werden mit besonders geringem Aufwand bestimmt, indem folgende Schritte vorzugsweise in der angegebenen Reihenfolge durchgeführt werden:
a) Festlegen eines Mindest- und eines Höchstgewichts für jeden Bauteiltyp ($T_1$, $T_2$ bis $T_X$);
b) Zusammenfassen einer jeweils bekannten Bauteileanzahl jedes Bauteiltyps ($T_1$, $T_2$ bis $Tx$) zu jeweils einer Gruppe ($G_1$, $G_2$ bis $G_X$);
c) Bestimmen des Gruppengewichts, indem die gesamte jeweilige Gruppe ($G_1$, $G_2$ bis $G_X$) gewogen wird;
d) Aufstellen einer Masse-/Gewichtsbilanzgleichung ($GL_1$, $GL_2$ bis $GL_X$) für die jeweilige Gruppe ($G_1$, $G_2$ bis $G_X$);
e) Berechnung neuer Mindest- und Höchstgewichte aus der Masse-/Gewichtsbilanzgleichung ($GL_1$, $GL_2$ bis $GL_X$) und den bisherigen Mindest- und Höchstgewichten;
f) Wiederhohlen der Schritte b) bis e) für weitere, vorzugsweise nachfolgend zusammengefasste Gruppen ($G_2$ bis $G_X$) der jeweiligen Bauteiltypen ($T_1$, $T_2$ bis $T_X$).

EP 4 345 982 A1

**Beschreibung**

Die vorliegende Erfindung betrifft ein Verfahren zum Zerlegen einer oder mehrerer Baugruppen gemäß dem Oberbegriff des Patentanspruchs 1, insbesondere ein Verfahren zum Zerlegen einer oder mehrerer Baugruppen, vorzugsweise Batterie-Packs, in jeweils mehrere Bauteile, von denen jedes Bauteil mit bestimmten Merkmalen und/oder Eigenschaften einem entsprechenden Bauteiltyp zugeordnet wird, und zur Bestimmung des Gewichts der zerlegten Bauteile.

Hintergrund der Erfindung

Das Verfahren zum Zerlegen einer oder mehrerer Baugruppen ist Teil eines Recycling-Prozesses. Die beinhalteten Rohstoffe der Baugruppen können wiederverwendet werden, wodurch Energie und Ressourcen eingespart werden können. Gerade durch die ansteigende Anzahl von Kraftfahrzeugen mit Elektroantrieb, wird in Zukunft die Anzahl an ausgedienten Batterie-Packs ansteigen, so dass deren Recycling eine noch höhere Bedeutung zukommen wird. Bei Verfahren zum Zerlegen einer oder mehrerer Baugruppen, insbesondere Batterie-Packs, z.B. Li-Ionen-Batterien, der vorstehend genannten Art ist es bekannt, ein angeliefertes, komplettes Batterie-Pack, z.B. eines Fahrzeugs, in alle Einzelteile zu zerlegen, welche anschließend geschreddert werden können. Beim Wareneingang werden die eingehenden Batterie-Packs gescannt, so dass deren Typ und somit welche Teile beim Zerlegeprozess anfallen bekannt ist. Für einzelne Bauteile des Batterie-Packs könnte deren Stückzahl dann bekannt sein, bei Kabeln ist dies i.d.R. nicht der Fall. Noch größere Unsicherheit besteht beim Gewicht der einzelnen Bauteile. Dieses ist üblicherweise nicht bekannt, wobei es zusätzlich einer Serienstreuung unterliegen kann. Nach dem Öffnen des Batterie-Packs wird dieses entladen, damit der anschließende Zerlegeprozess für den Werker ungefährlich ist. Das Batterie-Pack wird auf Werkstückträgern eines Transfersystems zur Weiteren Zerlegung befördert. Die demontierten Einzelteile werden wiederum auf Werkstückträgern abgelegt. Kabel können in Behältern gesammelt werden, die wiederum auf den Werkstückträgern transportiert werden. Von Batterie-Modulen, die aus dem Batterie-Pack entnommen werden, ist die Stückzahl und die Modulstückzahl auf den einzelnen Werkstückträgern üblicherweise bekannt. Auch die einzelnen Batterie-Module, die aus dem Batterie-Pack entnommen werden, werden entladen. Es ist denkbar, dass die Batterie-Module wiederum in einzelne Batterie-Zellen zerlegbar sind. Dann wird der vorstehende Prozess analog wiederholt, d.h. es wird von Werkstückträger zu Werkstückträger demontiert, bis die einzelnen Batterie-Zellen vorliegen. Diese werden wiederum entladen. Vor und nach einem jeden Zerlegeschritt kann ein unterschiedliches Transfersystem zum Einsatz kommen, welches an das Gewicht der zu transportierenden Teile angepasst ist. Sobald der beschriebene zweistufige Zerlegeprozess durchgeführt wird, kann es in der zweiten Stufe zu einer Vermischung von Komponenten unterschiedlicher Batterie-Packs kommen. Es ist dann nicht mehr ohne weiteres möglich, die Gewichtssumme der aus dem Prozess herauskommenden Einzelteile mit der Gewichtssumme der in den Prozess hineingehenden Batterie-Packs zu vergleichen. Darüber hinaus sind die Massenbilanzen insbesondere mit Bezug zu den wertvollen Materialien (Kupfer, Lithium, ...) nicht bekannt. Mit der Kenntnis der Massenbilanz ist gemeint, dass die zu Beginn und zum Ende eines oder mehrerer Verfahrensschritte, insbesondere der Zerlegung von Baugruppen und/oder Bauteile, die Gewichte aller Baugruppen, Bauteile und/oder Materialen zumindest mit einer bestimmten Genauigkeit bekannt sind. Diese Problematik der Unwissenheit der Massenbilanz wird weiter verschärft, wenn Batterie-Packs verschiedener Hersteller zerlegt werden. Die Prozesse sind dabei weiterhin anfällig für Manipulation, wie der Entnahme oder dem Ersetzen von solchen wertvollen Materialien, da eine vollständige Messung aller Transformations- und Aggregationsprozesse im Recycling nicht wirtschaftlich realisierbar ist.

Kurzbeschreibung der Erfindung

Der vorliegenden Erfindung liegt die Aufgabe zugrunde, ein Verfahren zum Zerlegen einer oder mehrerer Baugruppen bereitzustellen, welches die Probleme des Stands der Technik reduziert oder beseitigt. Insbesondere sollen die Gewichte der Bauteile mit besonders geringem Aufwand bestimmt werden und eine möglichst lückenlose Nachverfolgbarkeit der Gewichte der Bauteile gewährleistet werden. Insbesondere soll mit möglichst geringem Aufwand nachgewiesen werden, dass das gesamte dem Verfahren zum Zerlegen zugeführt Material auch in den Einzelfraktionen wieder vorhanden ist.

Diese Aufgabe wird durch ein Verfahren zum Zerlegen einer oder mehrerer Baugruppen gemäß Anspruch 1 gelöst.

Weitere vorteilhafte Ausführungsformen sind Gegenstand der Unteransprüche.

Genauer wird die Aufgabe gelöst durch folgende Schritte, die vorzugsweise in der angegebenen Reihenfolge durchgeführt werden:

a) Festlegen eines Mindest- und eines Höchstgewichts für jeden Bauteiltyp;
b) Zusammenfassen einer jeweils bekannten Bauteileanzahl jedes Bauteiltyps zu jeweils einer Gruppe;

c) Bestimmen des Gruppengewichts, indem die gesamte jeweilige Gruppe gewogen wird;

d) Aufstellen einer Masse-/Gewichtsbilanzgleichung für die jeweilige Gruppe;

e) Berechnung neuer Mindest- und Höchstgewichte aus der Masse-/Gewichtsbilanzgleichung und den bisherigen Mindest- und Höchstgewichten;

f) Wiederhohlen der Schritte b) bis e) für weitere, vorzugsweise nachfolgend zusammengefasste Gruppen der jeweiligen Bauteiltypen.

Auf diese Weise können die Gewichte/Massen der Bauteile mit besonders geringem Aufwand, nämlich mit einer minimalen Anzahl an Wiegevorgängen, bestimmt werden. Somit ist eine behördliche Nachweisepflicht (z.B. EU-Initiative für eine "Circular Economy" von wertvollen Rohstoffen) für die Recycling-Quoten von verwendeten Materialien seitens der Baugruppen- vorzugsweise Batterie-Hersteller erfüllbar. Es sind mit geringem Aufwand spezifische Massenbilanzen einer jeden Baugruppe vorzugsweise eines jeden Batterie-Pack generierbar. Die Abstände zwischen den jeweiligen Mindest- und Höchstgewichten eines jeden Bauteiltyps reduzieren sich mit jedem Schritt f), also jeder Wiederholung der Schritte b) bis e).

In einer bevorzugten Ausführungsform des Verfahrens wird Schritt f) zumindest so oft wiederholt, bis der Abstand eines Mindest- zum zugehörigen Höchstgewicht einer jeweiligen vorgegebenen Toleranz entspricht.

Somit ist die Genauigkeit des Verfahrens definiert. Das wahre Gewicht der entsprechenden Bauteile liegt zwischen dem zugehörigen ermittelten Mindest- und Höchstgewicht. Auch bei einem direkten Wiegen eines einzelnen Bauteils ist aufgrund der Messgenauigkeit der Waage das Gewicht des Bauteils nur mit einer entsprechenden Toleranz, also analog zum beschriebenen Verfahren, mit einem Mindest- und Höchstgewicht bestimmbar. Mittels des beschriebenen Verfahrens ist aber eine gleich hohe oder nur geringfügig schlechtere Toleranz erreichbar, ohne jedes Bauteil einzeln wiegen zu müssen.

Weiter bevorzugt werden die Bauteile einer Gruppe auf einem Werkstückträger gesammelt, der mittels eines Transportsystems bevorzugt automatisch transportiert wird. Im Rahmen des Schrittes c) wird der Werkstückträger mitsamt den Bauteilen einer Gruppe gewogen.

Somit kann die Zeit für einen Wiegevorgang minimiert werden. Nach dem Wiegen können die Bauteile mittels des Werkstückträgers schnell zu einem nachfolgend anstehenden Verfahrensschritt weiter transportiert werden.

In einer weiteren Ausführungsform des Verfahrens ist die Baugruppe eine Fahrzeugbatterie. Die Bauteile betreffen dann unterschiedliche Batterie-Module, die jeweils unterschiedlichen Bauteiltypen zugeordnet werden.

Eine (Fahrzeug-) Batterie bzw. ein Batterie-Pack kann für den Prozess vereinfacht aber nicht abschließend durch die folgenden Komponenten beschrieben werden:

- Gehäuse (Schale + Deckel)
- Module und Batteriezellen
- Batterie Management System ("Frontend" Batterie + Steuerungsmodule)
- Kabelbäume
- Füllmaterial
- Verbindungselemente

Durch das hohe Aufkommen von Batterien, auch wiederaufladbaren Batterien, ist das Verfahren zum Zerlegen einer oder mehrerer Baugruppen insbesondere für solche Batterien von Relevanz. Die Anzahl mobiler Geräte und Maschinen, wie mobiler Telefone, Kraftfahrzeuge aber auch Werkzeuge, z.B. für das Handwerk, steigt immer stärker an. Einerseits weisen die Batterien wertvolle Rohstoffe auf. Andererseits weisen die Batterien aufgrund ihrer chemischen Zusammensetzung auch als gefährlicher Abfall einzustufende Rohstoffe auf. Wenn solche Rohstoffe wiederverwendet werden, müssen diese nicht aufwendig entsorgt werden. Das Verfahren zum Zerlegen bildet die Grundlage diese Rohstoffe wiederzuverwenden.

Um Werker bzw. (De-)Monteure vor Stromschlägen zu schützen, wird die Batterie vorteilhafterweise vor dem Zerlegen in Batterie-Module entladen.

Zumindest zum Teil werden die Batterien von menschlichen Personen, eben den genannten Werkern bzw. (De-)Monteuren, zerlegt. Denkbar ist auch, dass einige Demontageschritte mit Hilfe von Robotern durchgeführt werden. Auch solche Roboter werden durch das Entladen vor Stromschlägen geschützt.

Weiter bevorzugt werden die Batterie-Module in weitere Bauteile, insbesondere in Batteriezellen, zerlegt.

Üblicherweise weist ein Batterie-Pack mehrere Module auf und jedes Modul weist mehrere Batteriezellen auf, so dass die Batteriezellen die kleinstmöglichen der Batteriefunktion zugehörigen Einheiten des Batterie-Packs darstellen. Je sortenreiner die zerlegten Bauteile sind, desto einfacher können diese nachfolgend für neue Produkte verwendet werden. Durch das weitere Zerlegen der Batterie-Module kann dann eine sehr hohe Sortenreinheit erreicht werden.

Ein bestimmter Bauteiltyp umfasst nach einer bevorzugten Ausführungsform des Verfahrens alle Kabel der Batterie, die zu einer gesonderten Gruppe zusammengefasst werden. Für diese gesonderte Gruppe wird das Verfahren nach Anspruch 1 nicht durchgeführt.

Die Kabel werden deswegen von dem erfindungsgemäßen Verfahren ausgenommen, da deren Stückzahl und/oder Länge im Batterie-Pack üblicherweise nicht bekannt ist.

Vorteilhafterweise beträgt bzw. betragen im Rahmen des Schrittes a) zumindest ein, vorzugsweise alle Mindestgewichte Null.

Weiter bevorzugt beträgt bzw. betragen im Rahmen des Schrittes a) zumindest ein, vorzugsweise alle Höchstgewichte Unendlich.

Somit ist sichergestellt, dass das Mindestgewicht zu Beginn des Verfahrens auf jeden Fall unterhalb des realen Gewichts und das Höchstgewicht oberhalb des realen Gewichts liegt. Das führt zu einer Vereinfachung des Verfahrens, so dass insbesondere der Programmieraufwand verringerbar ist, welcher notwendig ist, dass Verfahren vorzugsweise mittels eines Computers umzusetzen.

Vorteilhafterweise wird mittels eines solchen Computers jeweils ein digitaler Zwilling für eine jede der Baugruppen und eines jeden der Bauteile vorzugsweise durch ein Scannen einer Markierung generiert, um die der Baugruppen und der Bauteile zugehörigen Stammdaten, wie eine Demontageanleitung, und Bewegungsdaten, wie die Mindest- und Höchstgewichte, im Computer abzuspeichern und weiterzuverarbeiten.

Mittels eines solchen digitalen Zwillings ist auf einfache Weise die lückenlose Nachverfolgbarkeit der Gewichte der Bauteile durchführbar. Ein digitaler Zwilling wird auch als Datensatz bezeichnet. Es erfolgt somit eine digitale Repräsentation der Baugruppen, vorzugsweise Batterie-Packs, und deren Bauteile. Für diese Repräsentation werden die Eigenschaften des digitalen Abbildes der Baugruppen, vorzugsweise Batterie-Packs und deren Bauteile, zur Erfassung und Speicherung der Stamm- und Bewegungsdaten definiert, welche für die Auswertung der Masse-/Gewichtsbilanzgleichungen benötigt werden. Dadurch wird eine prozessübergreifende Datenstruktur geschaffen. Diese dient der Erfassung der Auswirkungen von Transformationsprozessen von Baugruppen, vorzugsweise Batterie-Packs im Recyclingprozess (Entladung (Veränderung des Ladestatus), Demontage (Veränderung der technischen Struktur), Zerhäckslung (Trennung der Materialien)) und der Nachverfolgung des Prozessfortschritts durch Zeitstempel. Durch diese Protokollierung der durchgeführten Prozesse beim Zerlegen bzw. im (Batterie-) Recycling wird die Verifikation der Arbeitsvorgänge ermöglicht (Soll-Ist-Vergleich, um z.B. eine materialabhängige Abweichung zu prüfen) und die Nachweispflicht von Sicherheits- und Prozessvorgaben gegenüber Behörden erfüllt.

In einer bevorzugten Ausführungsform des Verfahrens wird das Gewicht für einen der Typen der Teile durch Wiegen eines oder mehrerer Bauteile desselben Typs bestimmt, und insbesondere in den Bewegungsdaten der zugehörigen digitalen Zwillinge abgespeichert.

Dies führt zu einer direkten Evaluation der Massenbilanz gegenüber der oben beschriebenen als indirekt anzusehende Evaluation der Massenbilanz. Wenn nicht alle Bauteiltypen einer Massenbilanz indirekt bestimmt werden, sondern zumindest einer direkt bestimmt wird, sind insgesamt weniger Masse-/Gewichtsbilanzgleichungen zu lösen, so dass der Berechnungsaufwand verringert wird. Es könnte weiterhin die Komplexität der Masse-/Gewichtsbilanzgleichungen verringert werden, wenn diese Bauteiltypen mit direkt evaluierter Massenbilanz in den genannten Gruppen verwendeten werden. Dann ist die Berechnung der Masse-/Gewichtsbilanzgleichung vereinfacht.

In einer weiteren Ausführungsform des Verfahrens ist zumindest für einen Typ der Baugruppen und/oder einen Typ der Teile eine Soll-Masse bekannt. Die Soll-Masse ist oder wird insbesondere in den Stammdaten der zugehörigen digitalen Zwillinge abgespeichert.

Dies führt auch zu einer indirekten Evaluation der Massenbilanz, nämlich anhand von Herstellerangaben dieser Soll-Massen. Durch Integration solcher HerstellerInformationen in die Masse-/Gewichtsbilanzgleichungen kann der Berechnungsaufwand weiter verringert werden. Da aber die Herstellerangaben üblicherweise nicht vollständig und des Weiteren zu ungenau sind, kann auf das erfindungsgemäße Verfahren nicht verzichtet werden.

Zusammenfassend ist ein solches Verfahren zu vielfältigen Anwendungen geeignet, wie z.B. während des Recyclings von Fahrzeugbatterien. Es ist aber auch bei anderen Recyclingprozessen einsetzbar, nämlich immer dann, wenn Baugruppen in mehrere Bauteile zerlegt werden.

Kurzbeschreibung der Figuren

Im Nachfolgenden werden bevorzugte Ausführungsformen unter Bezugnahme auf die anliegenden Figuren näher dargestellt.

Fig. 1a zeigt ein schematisches Ablaufdiagramm eines Verfahrens zum Zerlegen mehrerer Baugruppen.

Fig. 1b zeigt ein schematisches Ablaufdiagramm des Verfahrens zum Zerlegen einer Baugruppe, nämlich einen Teil des in Fig.1a gezeigten Verfahren in einer im vgl. zu Fig.1a detaillierteren Darstellung bestimmter Verfahrensschritte.

Fig. 2a zeigt schematisch eine indirekte, erfindungsgemäße Bestimmung der Gewichte der Bauteile.

Fig. 2b zeigt schematisch eine direkte Bestimmung der Gewichte der Bauteile als Erweiterung des erfindungsgemäßen Verfahrens.

Fig. 2c zeigt schematisch eine weitere indirekte Bestimmung der Gewichte der Bauteile unter Zuhilfenahme von Herstellerangaben als Erweiterung des erfindungsgemäßen Verfahrens.

Beschreibung bevorzugter Ausführungsbeispiele

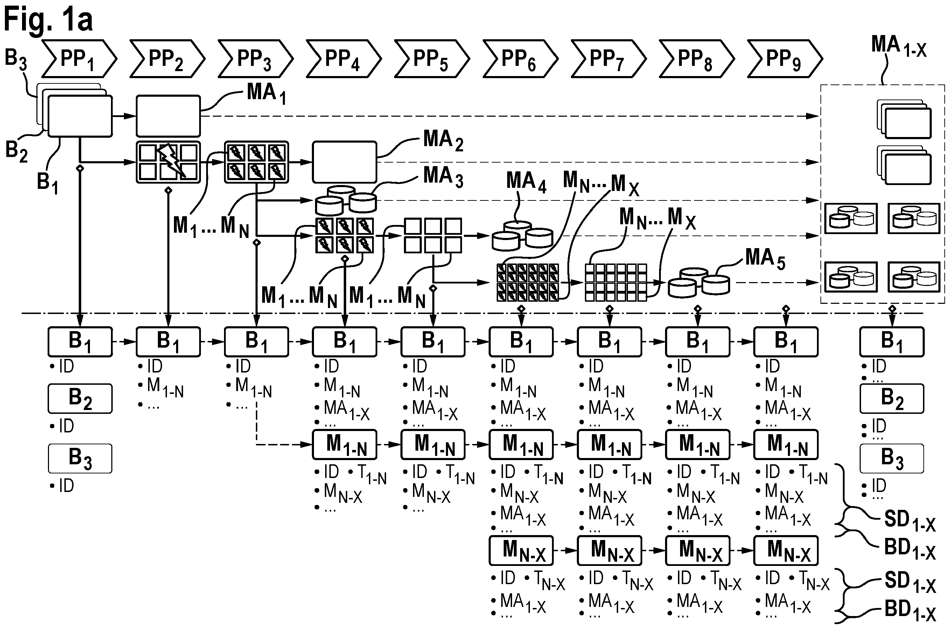

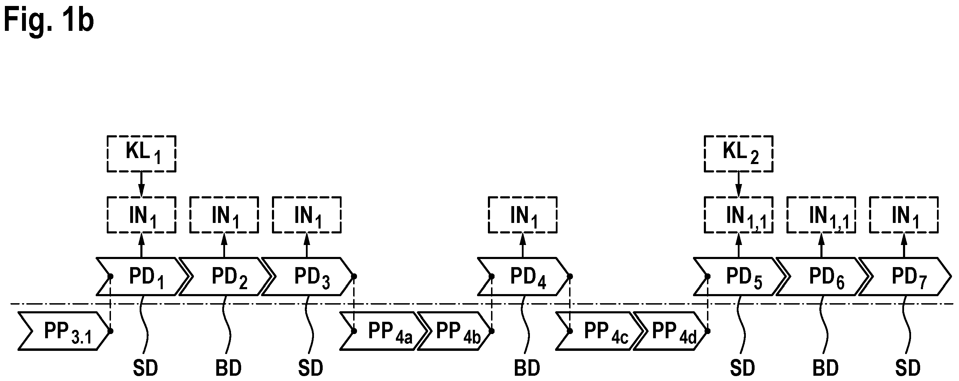

Das Verfahren zum Zerlegen einer oder mehrerer Baugruppen $B_1$, $B_2$ bis $B_X$, vorzugsweise Batterie-Packs, in jeweils mehrere Bauteile $M_1$, $M_2$ bis $M_N$, von denen jedes Bauteil $M_1$, $M_2$ bis $M_N$ mit bestimmten Merkmalen und/oder Eigenschaften einem entsprechenden Bauteiltyp $T_1$, $T_2$ bis $T_X$ zugeordnet wird, ist in Fig.1a beispielhaft für ein einziges Batterie-Pack $B_1$ im Detail dargestellt. Fig.1b zeigt detailliert den Ablauf der Demontage eines Bauteils $M_1$ aus einer Baugruppe $B_1$ heraus. Weiterhin erfolgt eine Bestimmung des Gewichts der zerlegten Bauteile $M_1$, $M_2$ bis $M_X$.

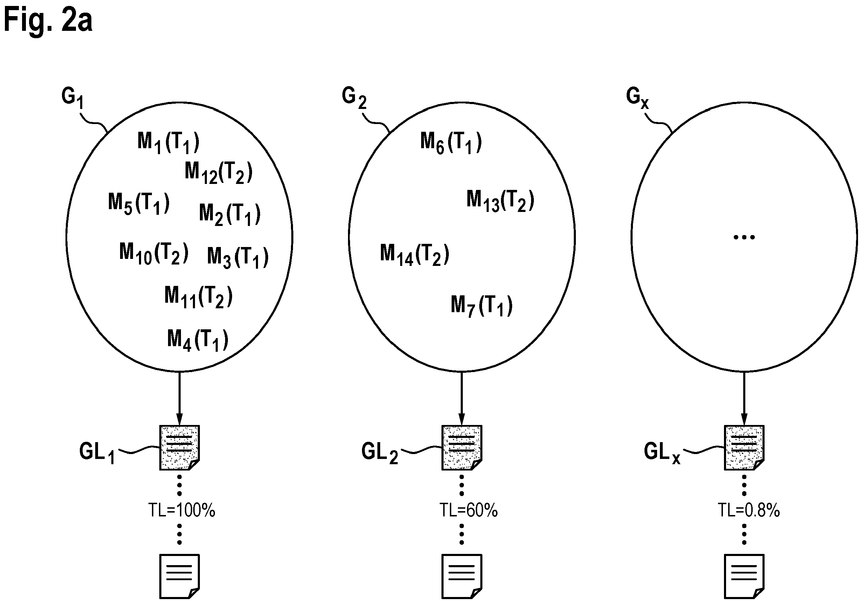

Folgende Schritte, die vorzugsweise in der angegebenen Reihenfolge durchgeführt werden, sind insbesondere auch aus einer Zusammenschau der Figuren 1a, 1b und 2a und des später beschriebenen Berechnungsbeispiels zu erfassen:

a) Festlegen eines Mindest- und eines Höchstgewichts für jeden Bauteiltyp $T_1$, $T_2$ bis $T_X$;
b) Zusammenfassen einer jeweils bekannten Bauteileanzahl jedes Bauteiltyps $T_1$, $T_2$ bis Tx zu jeweils einer Gruppe $G_1$, $G_2$ bis Gx;
c) Bestimmen des Gruppengewichts, indem die gesamte jeweilige Gruppe $G_1$, $G_2$ bis $G_X$ gewogen wird;
d) Aufstellen einer Masse-/Gewichtsbilanzgleichung $GL_1$, $GL_2$ bis $GL_X$ für die jeweilige Gruppe;
e) Berechnung neuer Mindest- und Höchstgewichte aus der Masse-/Gewichtsbilanzgleichung $GL_1$, $GL_2$ bis $GL_X$ und den bisherigen Mindest- und Höchstgewichten;
f) Wiederhohlen der Schritte b) bis e) für weitere, vorzugsweise nachfolgend zusammengefasste Gruppen $G_2$ bis $G_X$ der jeweiligen Bauteiltypen $T_1$, $T_2$ bis $T_X$.

Schritt f) wird zumindest so oft wiederholt, bis der Abstand eines Mindest- zum zugehörigen Höchstgewicht einer jeweiligen vorgegebenen Toleranz TL entspricht.

Fig. 1a zeigt eingangsseitig drei Baugruppen $B_1$, $B_2$ und $B_3$, die Zerlegung wird aber wie oben beschrieben nur für die Baugruppe $B_1$ im Detail gezeigt.

Die Bauteile $M_1$, $M_2$ bis $M_N$ einer Gruppe $G_1$, $G_2$ bis $G_X$ werden auf einem Werkstückträger gesammelt, der mittels eines Transportsystems bevorzugt automatisch transportiert wird. Im Rahmen des Schrittes c) wird der Werkstückträger mitsamt den Bauteilen $M_1$, $M_2$ bis $M_N$ einer Gruppe $G_1$, $G_2$ bis $G_X$ gewogen.

Solche Gruppen $G_1$, $G_2$ bis Gx sind in Fig. 2a gezeigt, wobei einer jeden Gruppe $G_1$, $G_2$ bis $G_X$ die umrandeten Bauteile $M_1$, $M_2$ bis $M_X$ zugeordnet sind. In Klammern ist dabei dargestellt, welchem Bauteiltyp $T_1$, $T_2$ bis $T_X$ die jeweiligen Bauteile $M_1$, $M_2$ bis $M_X$ angehören.

Die Baugruppe $B_1$, $B_2$ bis $B_X$ ist, wie in Fig.1a beispielhaft dargestellt, eine Fahrzeugbatterie. Die Bauteile $M_1$, $M_2$ bis $M_N$ betreffen dann unterschiedliche Batterie-Module, die jeweils unterschiedlichen Bauteiltypen $T_1$, $T_2$ bis $T_X$ zugeordnet werden.

Die Begriffe Batterie-Pack, Batterie und Fahrzeugbatterie werden im Rahmen dieser Anmeldung synonym verwendet.

Die Batterie $B_1$, $B_2$ bis $B_X$ wird, wie in Fig.1a dargestellt, vor dem Zerlegen in Batterie-Module $M_1$, $M_2$ bis $M_N$ in einem dritten Prozessschritt in der physischen Welt $PP_3$ entladen.

Die Batterie-Module $M_1$, $M_2$ bis $M_N$ werden in weitere Bauteile $M_N$ bis $M_X$, insbesondere in Batteriezellen, zerlegt.

Mittels der Indizes 1 bis N werden dabei Bauteile nach einer ersten Zerlegung der Baugruppen $B_1$, $B_2$ bis $B_X$ bezeichnet. Die weiteren Bauteile, welche nach einer weiteren Zerlegung der Bauteile separiert werden, werden mit den Indizes N bis X gekennzeichnet.

Ein bestimmter Bauteiltyp umfasst alle Kabel der Batterie $B_1$, $B_2$ bis $B_X$, die zu einer gesonderten Gruppe zusammengefasst werden. Für diese gesonderte Gruppe wird das Verfahren nach Anspruch 1 nicht durchgeführt.

Im Rahmen des Schrittes a) beträgt bzw. betragen zumindest ein, vorzugsweise alle Mindestgewichte Null.

Im Rahmen des Schrittes a) beträgt bzw. betragen zumindest ein, vorzugsweise alle Höchstgewichte Unendlich.

Anstelle von Unendlich kann ein sehr hoher Zahlenwert verwendet werden, der so hoch ist, dass sichergestellt ist, dass jedes Bauteil $M_1$, $M_2$ bis $M_X$ leichter als dieser Zahlenwert ist.

Mittels eines Computers wird jeweils ein digitaler Zwilling für eine jede der Baugruppen $B_1$, $B_2$ bis $B_X$ und eines jeden der Bauteile $M_1$, $M_2$ bis $M_X$ vorzugsweise durch ein Scannen einer Markierung generiert, um die der Baugruppen

$B_1$, $B_2$ bis $B_X$ und der Bauteile $M_1$, $M_2$ bis $M_X$ zugehörigen Stammdaten $SD_1$ bis $SD_X$, wie eine Demontageanleitung, und Bewegungsdaten $BD_1$ bis $BD_X$, wie die Mindest- und Höchstgewichte, im Computer abzuspeichern und weiterzuverarbeiten.

Die Repräsentation der digitalen Welt ist in Fig.1a unterhalb und in Fig.1b oberhalb der strichpunktierten Linie gezeigt.

Das Verfahren zum Zerlegen der Baugruppen $B_1$, $B_2$ bis $B_X$ weist gemäß Fig. 1a beispielhaft für Batterie-Packs im Detail folgende Phasen, nämlich folgende Prozessschritte in der physischen Welt $PP_1$ bis $PP_9$, auf:

$PP_1$:      Wareneingang - Eingang der Batterie-Packs $B_1$, $B_2$ bis $B_X$ und Registrierung im Computer, z.B. mittels eines Warenverwaltungssystem, insbesondere unter Generierung eines "digitalen Zwillings" und insbesondere unter Erstellung einer eindeutige Identifikationsnummer ID eines jeden Batterie-Packs $B_1$, $B_2$ bis $B_X$.

$PP_2$:      Identifikation - Bestimmung des Batterie-Typs durch automatisierte Auswertung, z.B. via eines Batteriemanagementsystem (BMS), oder durch manuelle Prüfung eines Mitarbeiters.

$PP_3$:      Entladung - Entladung des Batterie-Packs $B_1$, $B_2$ bis $B_X$ zur Gewährleistung von Arbeitsschutzrichtlinien bei der weiteren manuellen und/oder automatisierten Verarbeitung.

$PP_4$:      Demontage - Zerlegen des Batterie-Packs $B_1$, $B_2$ bis $B_X$ in seine Komponenten (Module $M_1$, $M_2$ bis $M_N$ + Material $MA_1$ bis $MA_X$).

$PP_5$:      Modul-Entladung - Entladung der Batterie-Module $M_1$, $M_2$ bis $M_N$ zur Gewährleistung von Arbeitsschutzrichtlinien bei der weiteren manuellen Verarbeitung.

$PP_6$:      Demontage (Batterie-Module $M_1$, $M_2$ bis $M_N$) - Zerlegung der Batterie-Module $M_1$, $M_2$ bis $M_N$ in seine Komponenten (Batteriezellen $M_N$ bis $M_X$ + Material $MA_1$ bis $MA_X$).

$PP_7$:      Batteriezellen-Entladung - Entladung der Batteriezellen $M_N$ bis $M_X$ zur Gewährleistung der technischen Prozesssicherheit (Explosions- und Brandschutz) bei den nachfolgenden Recycling-Vorgängen.

$PP_8$:      Schredder - mechanische und chemische Trennung der Materialien $MA_1$ bis $MA_X$ aus den Batteriezellen $M_N$ bis $M_X$.

$PP_9$:      Warenausgang - Ausgang der sortenreinen, recycelten Materialien $MA_1$ bis $MA_X$.

Die genannten Materialien $MA_1$ bis $MA_X$ sind dadurch charakterisiert, dass sie einen homogenen Körper aus nur einem chemisch definierbaren Stoff / einer chemisch definierbaren Verbindung bilden. Die genannten Materialien $MA_1$ bis $MA_X$ stellen somit die Endprodukte für die Zerlegung dar. Weiterhin sind die Materialien $MA_1$ bis $MA_X$ im Rahmen dieser Anmeldung als spezielle Sonderform der Bauteile $M_1$, $M_2$ bis $M_X$ anzusehen.

Der Digital Twin stellt durch eine digitale Vorzerlegung der Baugruppen $B_1$, $B_2$ bis $B_X$ vorzugsweise der Batterie in ihre Komponenten / Bauteile $M_1$, $M_2$ bis $M_X$ eine Datenstruktur für die Erfassung von Informationen zur Berechnung einer Massenbilanz nach dem oben beschriebenen Verfahren bereit. Die Datenstruktur wird dabei in Klassen $KL_1$ bis $KL_X$ und Instanzen $IN_{1,1}$ bis $IN_{X,X}$, beispielweise für die Batterie-Packs $B_1$ bis $B_X$, die Module $M_1$ bis $M_N$ und die Batteriezellen $M_N$ bis $M_X$, unterteilt. Den Klassen $KL_1$ bis $KL_X$ sind dabei insbesondere statische Daten und Basis-Informationen, insbesondere Stammdaten wie die den Bauteilen $M_1$, $M_2$ bis $M_X$ zugehörige Stammdaten $SD_1$ bis $SD_X$, zugeordnet. Den Instanzen $IN_{1,1}$ bis $IN_{X,X}$ sind dabei insbesondere dynamische Daten der Baugruppen $B_1$, $B_2$ bis $B_X$ während des Zerlegens, insbesondere die den Bauteilen $M_1$, $M_2$ bis $M_X$ zugehörigen Bewegungsdaten $BD_1$ bis $BD_X$, zugeordnet. Einzelne Datenobjekte der Datenstruktur beinhalten z.B. die folgenden Eigenschaften / Informationen:

- Hersteller
- Batterie-Typ
- technische Informationen (Spannungen, Widerstände, Standards, ...)
- Geometrie
- Arbeitsanweisungen, wie die Demontageanleitungen
- Materialverteilung, Soll-Gewicht / Soll-Masse der Bauteilen $M_1$, $M_2$ bis $M_X$ und/oder Materialien $MA_1$ bis $MA_X$
- ID
- Standort und Position
- Zeitstempel für jeden Prozessschritt
- Spannung

Somit können einer jeden Batterie $B_1$, $B_2$ bis $B_X$, deren Bauteile $M_1$, $M_2$ bis $M_X$ und/oder Materialien $MA_1$ bis $MA_X$ zugeordnet werden. Dies gilt auch insbesondere am Ende der Prozesskette aus Fig.1a, wobei hier symbolisch dargestellt ist, wie sich die Gesamtheit der Materialien $MA_1$ bis $MA_X$ auf die ursprünglichen, vor der Zerlegung vorhandenen Batterien $B_1$, $B_2$ und B3 aufteilt.

Das Zusammenspiel zwischen der physischen Welt und der digitalen Welt ist insbesondere auch in Fig. 1b beispielsweise für das Batterie-Pack $B_1$ gezeigt. Die Prozessschritte in der digitalen Welt werden hier mit $PD_1$ bis $PD_7$ bezeichnet. Fig. 1b zeigt im Detail folgende Prozessschritte, wobei der bereits oben genannte vierte Prozessschritt $PP_4$ in vier Prozessschritte $PP_{4a}$ bis $PP_{4d}$ unterteilt ist:

$PP_{3.1}$ (erfolgt nach dem dritten Prozessschritt $PP_3$): Transport der Batterie $B_1$ in eine Demontagestation.

$PD_1$: Identifikation der Batterie $B_1$ bei Eingang an der Demontagestation über die ID des zugehörigen digitalen Zwillings.

$PD_2$: Aktualisierung des digitalen Zwillings der Batterie $B_1$ mit einem Zeitstempel und der zugehörigen Position.

$PD_3$: Import einer Arbeitsanweisung aus der Instanz $IN_1$ in eine Werkerführung der Demontagestation.

$PP_{4a}$: Durchführung der physischen Demontage der Kabel, insbesondere eines Kabelbaums, und Ablage in einem entsprechendem Werkstückträger.

$PP_{4b}$: Ablage der Kabel in einem entsprechendem Werkstückträger.

$PD_4$: Durch Wiegung des Werkstückträgers für das erste Modul $M_1$ wird das Gewicht der Kabel z.B. durch eine Vorher-nachher-Differenzbetrachtung erfasst. Der digitale Zwilling wird aktualisiert, inklusive der Speicherung der erfassten Gewichte.

$PP_{4c}$: Durchführung der physischen Demontage des ersten Moduls $M_1$.

$PP_{4d}$: Ablage des ersten Moduls $M_1$ in einem entsprechendem Materialbehälter.

$PD_5$: Erzeugung eines neuen Sub-Objektes für das Modul $M_1$ im digitalen Zwilling der Batterie $B_1$. Das ist eine neue Instanz $IN_{1,1}$ der Klasse $KL_2$ "Modul $M_1$ von Batterie $B_1$", für die Herstellerinformationen wie Bezeichnung, Größe, und unter Umständen auch Gewicht und/ oder theoretische Soll-Materialverteilung z.B. aus einer verknüpften Datenbank importiert und gespeichert werden.

$PD_6$ Aktualisierung des digitalen Zwillings mit Bezug zu $IN_{1,1}$ mit einem Zeitstempel und der zugehörigen Position.

$PD_7$: Aktualisierung des digitalen Zwillings mit Bezug zu $IN_1$, nämlich Erstellung einer Verknüpfung von $IN_1$ mit dem Modul $M_1$ bzw. der zugehörigen Instanz $IN_{1,1}$.

Basierend auf der Datenstruktur sind verschiedene Varianten für die Ermittlung der Massenbilanz vorgesehen. Die erste, erfindungsgemäße Variante wird auch als indirekte Evaluation mit Erfahrungswerten / Self-Learning bezeichnet. Diese indirekte Evaluation wird nun beispielhaft für Batterie-Module $M_1$, $M_2$ bis $M_X$ erläutert. Ausgegangen wird von einer initialen Annahme des Gewichts für die Bauteiltypen $T_1$, $T_2$ bis $T_X$ der Batterie-Module $M_1$, $M_2$ bis $M_X$, nämlich entsprechender Mindest- und Höchstgewichte. Das mathematische Verfahren hinter dieser indirekten Evaluation ist die iterative Lösung eines Gleichungssystem, um die einzelnen Parameter der Summe einer aggregierten Materialmenge, also einer Gruppe $G_1$, $G_2$ bis $G_X$, zu spezifizieren. Eine Wiegung / Messung im Zerlegeverfahren / Recycling-Prozess entspricht dabei dem Hinzufügen einer Masse-/Gewichtsbilanzgleichung $GL_1$, $GL_2$ bis $GL_X$. Solange das Gleichungssystem unterbestimmt ist, d.h. es nicht eindeutig lösbar ist, ist für die Parameter lediglich eine Abschätzung für das minimale und das maximale Gewicht der Bauteiltypen $T_1$, $T_2$ bis $T_X$ möglich. Wenn mehr Informationen aus zusätzlichen, weiteren Messungen des Gewichts bzw. der Masse berücksichtigt werden, konvergiert die Lösung irgendwann und das Gleichungssystem wird bestimmt. Da das Gewicht von Bauteilen $M_1$, $M_2$ bis $M_X$ in der Realität allerdings materialbedingten Schwankungen unterliegt, wird die Lösung des Gleichungssystem niemals exakt konvergieren. Es muss daher die Toleranz TL bzw. ein Toleranzbereich (Divergenzintervall) für den Lösungsvektor des Gleichungssystem berücksichtigt werden. Mit jeder Messung des Gewichts einer Gruppe $G_1$, $G_2$ bis $G_X$ (Stichprobe) und dem Wissen über die enthaltenen Batterie-Module $M_1$, $M_2$ bis $M_X$ wird das mögliche Einzelgewicht der Bauteiltypen $T_1$, $T_2$ bis $T_X$ genauer eingegrenzt, obwohl vorher vorzugsweise keine Informationen des Gewichts der Bauteiltypen $T_1$, $T_2$ bis Tx vorhanden war.

Im Folgenden wird nun ein Berechnungsablauf eines Berechnungsbeispiels skizziert, wie er in einer stark vereinfachten Weise durchgeführt wird. Gemäß des zugehörigen in Fig.2a stark vereinfachten Beispiels werden lediglich vierzehn Bauteile $M_1$, $M_2$ bis $M_{14}$ zweier Bauteiltypen $T_1$, $T_2$ betrachtet. Es werden z.B. folgende Referenzwerte angenommen, welche zunächst unbekannt für die Kalkulation gemäß Fig.2a sind: Die Batterie-Module vom Bauteiltyp $T_1$ wiegen unbekannterweise jeweils 5kg und die Batterie-Module vom Bauteiltyp $T_2$ wiegen unbekannterweise jeweils 3kg. Zunächst erfolgt eine Initialisierung, nämlich die Festlegung der Mindestgewichte und Höchstgewichte zu Beginn der Bestimmung der Gewichte der Bauteiltypen $T_1$ und $T_2$ gemäß Schritt a) des Verfahrens. Die Gewichte der Bauteiltypen $T_1$ und $T_2$ liegen zwischen 0 und unendlich.

Das Resultat der Initialisierung ist:

$$0 \leq T_1 \leq \infty$$

$$0 \leq T_2 \leq \infty$$

Eine 1. Wiegung / Messung der Gruppe $G_1$ von fünf Batterie-Modulen $M_{1-5}$ vom Bauteiltyp $T_1$ und drei Batterie-Modulen $M_{10-12}$ vom Bauteiltyp $T_2$ ergibt 34kg, was zu folgender Masse-/Gewichtsbilanzgleichung $GL_1$ führt:

$$5T_1 + 3T_2 = 34kg$$

- $T_1$ wiegt somit maximal 34/5 = 6,8kg unter der Annahme, dass $T_2$ = 0kg ist.
- $T_2$ wiegt maximal 34/3 = 11,3kg unter der Annahme, dass $T_1$ = 0kg ist.
- $T_1$ wiegt minimal 0kg (Gewicht von $T_2$ ist unbekannt).
- $T_2$ wiegt minimal 0kg (Gewicht von $T_1$ ist unbekannt).

Das Resultat der 1. Messung ist:

$$0 \leq T_1 \leq 6,8kg$$

$$0 \leq T_2 \leq 11,3kg$$

Eine 2. Wiegung / Messung der Gruppe $G_2$ von zwei Batterie-Modulen $M_{6-7}$ vom Bauteiltyp $T_1$ und zwei Batterie-Modulen $M_{13-14}$ vom Bauteiltyp $T_2$ ergibt 16kg, was zu folgender Masse-/Gewichtsbilanzgleichung $GL_2$ führt:

$$2T_1 + 2T_2 = 16kg$$

- $T_1$ wiegt maximal 16/2 = 8kg unter der Annahme, dass $T_2$ = 0kg ist.
- $T_2$ wiegt maximal 16/2 = 8kg unter der Annahme, dass $T_1$ = 0kg ist.
- $T_1$ wiegt minimal 0kg (Gewicht von $T_2$ ist unbekannt).
- $T_2$ wiegt minimal 0kg (Gewicht von $T_1$ ist unbekannt).

Das Resultat der 2. Messung ist:

$$0 \leq T_1 \leq 8$$

$$0 \leq T_2 \leq 8$$

Die beiden Messungen werden nun miteinander verrechnet. Die maximalen Werte von $T_1$ und $T_2$ werden auf den kleineren Wert der Grenzen verschoben:

$$0 \leq T_1 \leq 6,8$$

$$0 \leq T_2 \leq 8$$

- $T_2$ wiegt minimal (16 - 2*6,8)/2 = 1,2 kg (basierend auf $2T_1 + 2T_2$ = 16 und $T_1 \leq$ 6,8kg).
- $T_1$ wiegt maximal (16 - 2*1,2)/2 = 6,8 kg (basierend auf $2T_1 + 2T_2$ = 16 und $T_2 \geq$ 1,2kg).
- $T_2$ wiegt maximal (34 - 3*1,2)/5 = 6,08kg (basierend auf $5T_1 + 3T_2$ = 34 und $T_2 \geq$ 1,2kg).

Nach der Verrechnung lassen sich folgende Aussagen treffen:

$$0kg \leq T_1 \leq 6,8kg$$

$$1,2kg \leq T_2 \leq 6,08kg$$

Dieses Zusammenfassen einer jeweils bekannten Bauteileanzahl jedes Bauteiltyps $T_1$ und $T_2$ zu jeweils einer Gruppe $G_1$ und $G_2$ nach Schritt b) des Verfahrens und das Bestimmen des Gruppengewichts nach Schritt c) des Verfahrens, indem die gesamte jeweilige Gruppe $G_1$ und $G_2$ gewogen wird, finden zwischen den in Fig.1a gezeigten Prozessschritten $PP_4$ und $PP_6$ vorzugsweise zwischen den Prozessschritten $PP_5$ und $PP_6$ statt.

Durch die Integration neuer Masse-/Gewichtsbilanzgleichungen $GL_1$, $GL_2$ bis $GL_X$ (Messungen) und der Verrechnung mit den bestehenden Informationen entsteht eine immer engere Toleranz TL bzw. ein immer engeres Intervall für die Mindest- und Höchstgewichte, d.h. nur durch die Speicherung aller Wiegungen / Messungen wird diese Rekursion ermöglicht. Es wird eben, wie oben beschrieben, der Schritt f) so oft wiederholt, bis der Abstand eines Mindest- zum zugehörigen Höchstgewicht einer jeweiligen vorgegebenen Toleranz TL entspricht. Fig.2a zeigt exemplarisch, dass nach einer x-ten Messung die Toleranz TL 0,8% beträgt. Die Toleranz TL bezieht sich dabei z.B. auf einen mittig zwischen einem Mindest- zum zugehörigen Höchstgewicht liegenden Wert, welcher durch das unter der Toleranz TL dargestellte papierartige Symbol symbolisiert wird. Dieses Verfahren wird vorzugsweise auch für weitere Bauteiltypen $T_1$, $T_2$ bis $T_X$ durchgeführt, z.B. für die Bauteiltypen $T_1$, $T_2$ bis $T_X$ der Batteriezellen $M_N$ bis $M_X$.

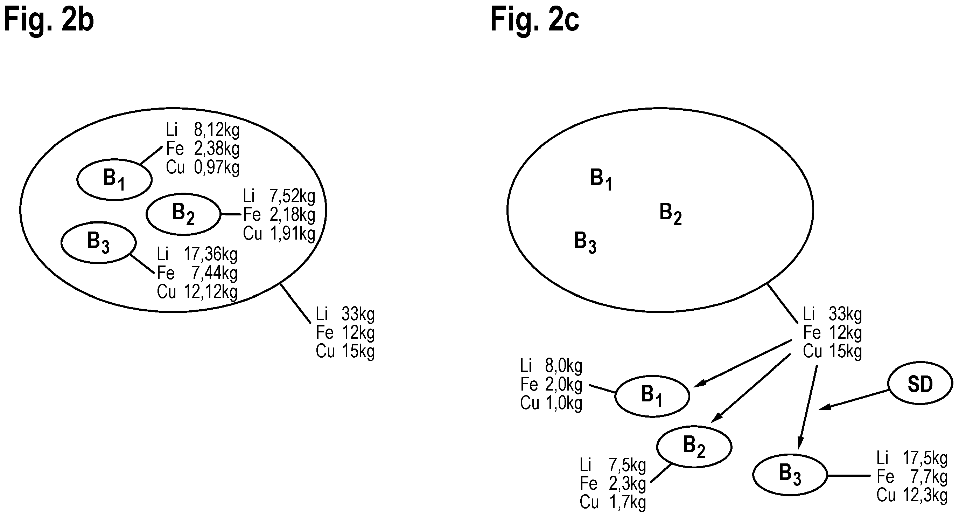

Das Gewicht für einen der Typen $T_1$, $T_2$ bis $T_X$ der Teile kann auch durch Wiegen eines oder mehrerer Bauteile $M_1$, $M_2$ bis $M_X$ desselben Typs $T_1$, $T_2$ oder $T_X$ bestimmt werden, und insbesondere in den Bewegungsdaten $BD_1$ bis $BD_X$ der zugehörigen digitalen Zwillinge abgespeichert werden. Dieser Vorgang wird auch als direkte Evaluation des Gewichts der Typen $T_1$, $T_2$ bis $T_X$ bezeichnet und stellt somit eine weitere Variante bei der Bestimmung der Massenbilanzen dar. Bei direkten und durchgängigen Messungen aller Gewichte der Typen $T_1$, $T_2$ bis $T_X$ im Zerlegeverfahren wäre die oben beschriebene, indirekte Evaluation mit Erfahrungswerten / Self-Learning nicht notwendig. Bei direkter Evaluation des Gewichts zumindest eines der Typen $T_1$, $T_2$ bis $T_X$, aber nicht aller der Typen $T_1$, $T_2$ bis $T_X$, kann aber die Komplexität des oben beschriebenen Gleichungssystems zumindest verringert werden. Diese direkte Evaluation wird anhand von Fig.2b nochmals erläutert. Es werden hier drei Baugruppen $B_1$, $B_2$ und $B_3$ bis in ihre kleinsten Einzelteile zerlegt, welche jeweils einzeln gewogen werden. Die erste Baugruppe $B_1$ wird in 8,12kg Lithium (Li), in 2,38kg Eisen (Fe) und in 0,97kg Kupfer (Cu) zerlegt. Die zweite Baugruppe $B_2$ wird in 7,25kg Lithium (Li), in 2,18kg Eisen (Fe) und in 1,91 kg Kupfer (Cu) zerlegt. Die dritte Baugruppe $B_3$ wird in 17,36kg Lithium (Li), in 7,44kg Eisen (Fe) und in 12,12kg Kupfer (Cu) zerlegt. Insgesamt können somit 33kg Lithium (Li), 12kg Eisen (Fe) und 15kg Kupfer (Cu) einer Herstellung neuer Produkte zugeführt werden.

Zumindest für einen Typ der Baugruppen $B_1$, $B_2$ bis $B_X$ und/oder einen Typ $T_1$, $T_2$ bis $T_X$ der Teile ist vorzugsweise eine Soll-Masse bekannt. Insbesondere ist oder wird diese Soll-Masse in den Stammdaten $SD_1$ bis $SD_X$ der zugehörigen digitalen Zwillinge abgespeichert. Mittels der Soll-Massen ist eine weitere, indirekte Evaluation des Gewichts der Bauteiltypen $T_1$, $T_2$ bis $T_X$ durchführbar. Hier werden aber nicht anhand von Erfahrungswerten / Self-Learning, sondern auf Basis von Herstellerinformationen, eben der Soll-Massen, die Gewichte der Bauteiltypen $T_1$, $T_2$ bis Tx bestimmt. Die Grundlage ist dabei jeweils ein sogenannter Material-Batch, d.h. die in einem Zeitraum zerlegte Menge an Bauteilen $M_1$, $M_2$ bis $M_X$ und/oder Materialien $MA_1$ bis $MA_X$. Durch die Erfassung im Wareneingang kann als Mindestinformation ermittelt werden, welche der Baugruppen $B_1$, $B_2$ bis $B_X$ generell in diesem Material-Batch enthalten ist. Das Ist-Gewicht / die Ist-Masse wird mit dem Soll-Gewicht / der Soll-Masse verglichen und die Massenbilanz damit bestätigt oder Abweichungen aufgezeigt. Da die Information schon zu Beginn des Zerlege-Prozesses vorliegt, können potenzielle Abweichungen einzelner Bauteilen $M_1$, $M_2$ bis $M_X$ und/oder Materialien $MA_1$ bis $MA_X$ auch in einzelnen Prozessschritten erkannt werden. Diese indirekte Evaluation anhand von Herstellerangaben wird anhand von Fig.2c nochmals erläutert. Hier werden lediglich ganz am Ende des Zerlege-Prozesses dreier Baugruppen $B_1$, $B_2$ und $B_3$ die Mengen an Lithium (Li) mit 33kg, Eisen (Fe) mit 12kg und Kupfer (Cu) mit 15kg gemessen. Aus den Herstellerangaben wird ein Verhältnis bestimmt, welcher Anteil der gemessenen Mengen welcher Baugruppe $B_1$, $B_2$ und $B_3$ zuzuordnen ist. Die Herstellerangaben sind als Stammdaten $SD_{1-X}$ anzusehen. Die gemessenen Werte 33kg Li, 12kg Fe und 15kg Cu werden rechnerisch anteilig auf die Baugruppe $B_1$, $B_2$ und $B_3$ aufgeteilt, was zu den Fig.2c angrenzend zu den Baugruppe $B_1$, $B_2$ und $B_3$ dargestellten Werten führt. Etwaige Abweichungen zu den Herstellerangaben können entsprechend dokumentiert werden.

Die Varianten indirekte Evaluation mit Erfahrungswerten / Self-Learning, direkte Evaluation und indirekte Evaluation auf Basis von Herstellerinformationen schließen sich nicht gegenseitig aus, sondern können parallel verwendet werden, je nach initialer Informationslage, den vorliegenden Herstellerinformationen für einzelne Baugruppen $B_1$, $B_2$ und $B_3$, insbesondere Batterien, und der Möglichkeit von Messungen / Wiegungen innerhalb der Verfahrensschritte.

Im Rahmen der bereits genannten Werkerführung kann den Mitarbeitern über mit dem Computer gekoppelten Anzeigegeräten mitgeteilt werden, welche Arbeitsschritte auszuführen sind. Z.B kann den Mitarbeitern mitgeteilt werden, wie die Baugruppen $B_1$, $B_2$ bis $B_X$ und/oder die Bauteile $M_1$, $M_2$ bis $M_X$ zu zerlegen sind. Weiterhin kann den Mitarbeitern mitgeteilt werden, welche Bauteile $M_1$, $M_2$ bis $M_X$ zu einer Gruppe $GL_1$, $GL_2$ bis GLx vorzugsweise auf einem Werkstückträger zusammenzufassen sind und dann zusammen gewogen werden. Der Computer wird dabei die Zusammenstellung der Gruppen $GL_1$, $GL_2$ bis $GL_X$ derart wählen, dass das Verfahren besonders schnell konvergiert, d.h. dass eine Minimierung der Anzahl der Messungen / Wiegungen erreichbar ist. Dazu sind im Computer entsprechende Optimierungsalgorithmen, insbesondere ein Self-Learning unter Integration künstlicher Intelligenz, integriert. Solche Optimierungsalgorithmen beziehen sich vorzugsweise nicht nur auf die indirekte Evaluation mit Erfahrungswerten, sondern beziehen alle drei Varianten der Evaluation der Massenbilanzen mit ein.

Bezugszeichenliste

| | |
|---|---|
| $B_1$, $B_2$ bis $B_X$ | Baugruppen |
| $M_1$, $M_2$ bis $M_X$ | Bauteile |
| $T_1$, $T_2$ bis $T_X$ | Bauteiltyp |
| $G_1$, $G_2$ bis $G_X$ | Gruppen |
| $GL_1$, $GL_2$ bis $GL_X$ | Masse-/Gewichtsbilanzgleichung |
| TL | Toleranz |
| $PP_1$ bis $PP_9$ | Prozessschritte in der physischen Welt |
| $PD_1$ bis $PD_7$ | Prozessschritte in der digitalen Welt |
| $SD_1$ bis $SD_X$ | der Bauteile $M_1$, $M_2$ bis $M_X$ zugehörige Stammdaten |
| $BD_1$ bis $BD_X$ | der Bauteile $M_1$, $M_2$ bis $M_X$ zugehörige Bewegungsdaten |
| $MA_1$ bis $MA_X$ | verschiedene Materialien der Baugruppen |
| $KL_1$ bis $KL_X$ | Klassen einer Datenstruktur (statisch) |
| $IN_{1,1}$ bis $IN_{X,X}$ | Instanzen einer Datenstruktur (dynamisch) |
| ID | eindeutige Identifikationsnummer |

**Patentansprüche**

1. Verfahren zum Zerlegen einer oder mehrerer Baugruppen ($B_1$, $B_2$ bis $B_X$), vorzugsweise Batterie-Packs, in jeweils mehrere Bauteile ($M_1$, $M_2$ bis $M_X$), von denen jedes Bauteil ($M_1$, $M_2$ bis $M_X$) mit bestimmten Merkmalen und/oder Eigenschaften einem entsprechenden Bauteiltyp ($T_1$, $T_2$ bis $T_X$) zugeordnet wird, und zur Bestimmung des Gewichts der zerlegten Bauteile ($M_1$, $M_2$ bis $M_X$), **gekennzeichnet durch** folgende Schritte, die vorzugsweise in der angegebenen Reihenfolge durchgeführt werden:

   a) Festlegen eines Mindest- und eines Höchstgewichts für jeden Bauteiltyp ($T_1$, $T_2$ bis $T_X$);
   b) Zusammenfassen einer jeweils bekannten Bauteileanzahl jedes Bauteiltyps ($T_1$, $T_2$ bis Tx) zu jeweils einer Gruppe ($G_1$, $G_2$ bis $G_X$);
   c) Bestimmen des Gruppengewichts, indem die gesamte jeweilige Gruppe ($G_1$, $G_2$ bis $G_X$) gewogen wird;
   d) Aufstellen einer Masse-/Gewichtsbilanzgleichung ($GL_1$, $GL_2$ bis $GL_X$) für die jeweilige Gruppe ($G_1$, $G_2$ bis $G_X$);
   e) Berechnung neuer Mindest- und Höchstgewichte aus der Masse-/Gewichtsbilanzgleichung ($GL_1$, $GL_2$ bis $GL_X$) und den bisherigen Mindest- und Höchstgewichten;
   f) Wiederhohlen der Schritte b) bis e) für weitere, vorzugsweise nachfolgend zusammengefasste Gruppen ($G_2$ bis $G_X$) der jeweiligen Bauteiltypen ($T_1$, $T_2$ bis $T_X$).

2. Verfahren nach Anspruch 1, **dadurch gekennzeichnet, dass** Schritt f) zumindest so oft wiederholt wird, bis der Abstand eines Mindest- zum zugehörigen Höchstgewicht einer jeweiligen vorgegebenen Toleranz (TL) entspricht.

3. Verfahren nach Anspruch 1 oder 2, **dadurch gekennzeichnet, dass** die Bauteile ($M_1$, $M_2$ bis $M_X$) einer Gruppe ($G_1$, $G_2$ bis $G_X$) auf einem Werkstückträger gesammelt werden, der mittels eines Transportsystems bevorzugt automatisch transportiert wird, wobei im Rahmen des Schrittes c) der Werkstückträger mitsamt den Bauteilen ($M_1$,

$M_2$ bis $M_X$) einer Gruppe ($G_1$, $G_2$ bis $G_X$) gewogen wird.

4. Verfahren nach einem der vorstehenden Ansprüche, **dadurch gekennzeichnet, dass** die Baugruppe ($B_1$, $B_2$ bis $B_X$) eine Fahrzeugbatterie ist, wobei die Bauteile ($M_1$, $M_2$ bis $M_X$) unterschiedliche Batterie-Module betreffen, die jeweils unterschiedlichen Bauteiltypen ($T_1$, $T_2$ bis $T_X$) zugeordnet werden.

5. Verfahren nach Anspruch 4, **dadurch gekennzeichnet, dass** die Batterie ($B_1$, $B_2$ bis $B_X$) vor dem Zerlegen in Batterie-Module ($M_1$, $M_2$ bis $M_N$) entladen wird.

6. Verfahren nach einem der Ansprüche 4 bis 5, **dadurch gekennzeichnet, dass** die Batterie-Module ($M_1$, $M_2$ bis $M_N$) in weitere Bauteile ($M_N$ bis $M_X$), insbesondere in Batteriezellen, zerlegt werden.

7. Verfahren nach einem der Ansprüche 4 bis 6, **dadurch gekennzeichnet, dass** ein bestimmter Bauteiltyp alle Kabel der Batterie ($M_1$, $M_2$ bis Mx) umfasst, die zu einer gesonderten Gruppe zusammengefasst werden, wobei für diese gesonderte Gruppe das Verfahren nach Anspruch 1 nicht durchgeführt wird.

8. Verfahren nach einem der vorstehenden Ansprüche, **dadurch gekennzeichnet, dass** im Rahmen des Schrittes a) zumindest ein, vorzugsweise alle Mindestgewichte Null beträgt bzw. betragen.

9. Verfahren nach einem der vorstehenden Ansprüche, **dadurch gekennzeichnet, dass** im Rahmen des Schrittes a) zumindest ein, vorzugsweise alle Höchstgewichte Unendlich beträgt bzw. betragen.

10. Verfahren nach einem der vorstehenden Ansprüche, **dadurch gekennzeichnet, dass** mittels eines Computers jeweils ein digitaler Zwilling für eine jede der Baugruppen ($B_1$, $B_2$ bis $B_X$) und eines jeden der Bauteile ($M_1$, $M_2$ bis $M_X$) vorzugsweise durch ein Scannen einer Markierung generiert wird, um die der Baugruppen ($B_1$, $B_2$ bis $B_X$) und der Bauteile ($M_1$, $M_2$ bis $M_X$) zugehörigen Stammdaten ($SD_1$ bis $SD_X$), wie eine Demontageanleitung, und Bewegungsdaten ($BD_1$ bis BDx), wie die Mindest- und Höchstgewichte, im Computer abzuspeichern und weiterzuverarbeiten.

11. Verfahren nach Anspruch 10, **dadurch gekennzeichnet, dass** das Gewicht für einen der Typen ($T_1$, $T_2$ bis $T_X$) der Teile ($M_1$, $M_2$ bis $M_X$) durch Wiegen eines oder mehrerer Bauteile ($M_1$, $M_2$ bis $M_X$) desselben Typs ($T_1$, $T_2$ bis $T_X$) bestimmt wird, und insbesondere in den Bewegungsdaten ($BD_1$ bis $BD_X$) der zugehörigen digitalen Zwillinge abgespeichert wird.

12. Verfahren nach einem der vorstehenden Ansprüche, **dadurch gekennzeichnet, dass** zumindest für einen Typ der Baugruppen ($B_1$, $B_2$ bis $B_X$) und/oder einen Typ ($T_1$, $T_2$ bis $T_X$) der Teile ($M_1$, $M_2$ bis $M_X$) eine Soll-Masse bekannt, und insbesondere in den Stammdaten ($SD_1$ bis $SD_X$) der zugehörigen digitalen Zwillinge abgespeichert ist oder wird.

Fig. 1a

Fig. 1b

EP 4 345 982 A1

## Fig. 2a

$G_1$

$M_1(T_1)$
$M_{12}(T_2)$
$M_5(T_1)$ $M_2(T_1)$
$M_{10}(T_2)$ $M_3(T_1)$
$M_{11}(T_2)$
$M_4(T_1)$

$G_2$

$M_6(T_1)$
$M_{13}(T_2)$
$M_{14}(T_2)$
$M_7(T_1)$

$G_x$

...

$GL_1$

TL=100%

$GL_2$

TL=60%

$GL_x$

TL=0.8%

Fig. 2b

Fig. 2c

EP 4 345 982 A1

Europäisches
Patentamt

European
Patent Office

Office européen
des brevets

**EUROPÄISCHER RECHERCHENBERICHT**

Nummer der Anmeldung

**EP 23 19 6693**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 108 110 367 A (SHENZHEN BAK BATTERY CO LTD) 1. Juni 2018 (2018-06-01) * Ansprüche 1-10 * * Abbildung 1 * ----- | 1-12 | INV. H01M10/54 |
| A,P | QU WEIBIN ET AL: "Adaptive planning of human-robot collaborative disassembly for end-of-life lithium-ion batteries based on digital twin", JOURNAL OF INTELLIGENT MANUFACTURING, [Online] 3. April 2023 (2023-04-03), XP093130838, New York ISSN: 0956-5515, DOI: 10.1007/s10845-023-02081-9 INTERNET Gefunden im Internet: URL:https://link.springer.com/content/pdf/10.1007/s10845-023-02081-9.pdf> [gefunden am 2024-02-13] * Abbildung 12 * * Seite 7, Spalte 1, Absatz 1 * * Seite 11, Spalte 1, Absatz 1 - Absatz 2 * * Seite 16, Spalte 2, Absatz 6 - Seite 18 * ----- | 1-12 | |
| A,P | CN 116 207 388 A (UNIV NATIONAL DONG HWA) 2. Juni 2023 (2023-06-02) * Ansprüche 1-9 * ----- | 1-12 | RECHERCHIERTE SACHGEBIETE (IPC) H01M |

Der vorliegende Recherchenbericht wurde für alle Patentansprüche erstellt

| Recherchenort | Abschlußdatum der Recherche | Prüfer |
|---|---|---|
| München | 13. Februar 2024 | Kuhn, Tanja |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 23 19 6693**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**13-02-2024**

| Im Recherchenbericht angeführtes Patentdokument | Datum der Veröffentlichung | Mitglied(er) der Patentfamilie | Datum der Veröffentlichung |
|---|---|---|---|
| CN 108110367 A | 01-06-2018 | KEINE | |
| CN 116207388 A | 02-06-2023 | KEINE | |

EPO FORM P0461

Für nähere Einzelheiten zu diesem Anhang : siehe Amtsblatt des Europäischen Patentamts, Nr.12/82